# EUROPEAN PATENT APPLICATION

(11) **EP 3 462 431 A1**
(43) Date of publication of application: **03.04.2019**
(21) Application number: 17913117.2
(22) Date of filing: 08.11.2017
(51) Int. Cl.: G09B 5/00

(54) **BUILDING BLOCK-TYPE SPELLING HOST, CHARACTER MODULE AND SPELLING SYSTEM**

(30) Priority: 31.07.2017 CN 201710643940
(71) Applicant: Shenzhen Xiaoxi Technology Co., Ltd, Shenzhen, Guangdong 518000 (CN)
(72) Inventor: HUANG, Jinlong, Shenzhen, Guangdong 518000 (CN)
(74) Representative: Viering, Jentschura & Partner mbB Patent- und Rechtsanwälte
(86) International application number: PCT/CN2017/109853
(87) International publication number: WO 2019/024307

(57) **Abstract**

The present invention provides a building block type character module, a building block type spelling host and a building block type spelling system. The building block type character module comprises at least two character marks, a first module interface and a second module interface. The first module interface includes a direction detection interface, and the second module interface includes a direction transfer interface. The direction transfer interface includes at least two direction transfer contacts. Each of the direction transfer contacts is electrically connected with a direction identification element. The direction detection interface is used to detect the parameters of the direction transfer contact. The building block type spelling system can calculate the character mark of each of the building block type character modules corresponding to the side of the building block type spelling host toward the user, and read the spelling sentence. The required number of the building block type character modules is small and easy to be found.

## Description

### TECHNICAL FIELD

The present invention relates to the field of educational devices, and in particular to a building block type spelling host, a character module and a spelling system.

### BACKGROUND

Children are flowers of the motherland. The education of the children has received more and more attention, and the education methods also have become more diverse. However, traditional literacy products still have the problems of a single form, a single interaction way, and less attractive to children. Some spelling toys that use the interactive method of building blocks have only one character. Therefore, it requires a large number of building block type character modules, and it is difficult to find required characters.

### SUMMARY

In order to overcome the shortage of the prior art, the objective of the present invention is to provide building block type spelling hosts, building block type character modules and building block type spelling systems, wherein a plurality of characters can be set on a building block type character module which results in a small number of building block type character modules being needed and easy to be found.

The objective of the present embodiment is achieved by the following technical solutions:

A building block type character module comprising a module body including a sub control unit. The module body includes at least two marking sides provided with character marks. A first module interface and a second module interface are respectively disposed on opposite ends of the module body, and the first module interface and the second module interface are both electrically connected to the sub control unit. The first module interface includes a direction detection interface, a first data interface and a power receiving interface, and the second module interface includes a direction transfer interface, a second data interface and a sub power supply interface. The direction transfer interface includes at least two electrically conductive direction transfer contacts. Each of the direction transfer contacts is electrically connected with a direction identification element. The direction detection interface is configured to electrically connect with a direction identification contact of the building block type spelling host or a direction transfer contact of the last building block type character module and detect parameter of the direction identification contact or the direction transfer contact connected with the direction detection interface. The first data interface is configured to interface with the main data interface of the building block type spelling host or the second data interface of the last building block type character module. The power receiving interface is configured to receive from a main power supply interface of the building block type spelling host or the sub power supply interface of the last building block type character module.

Preferably, the direction transfer contacts are respectively connected to different direction identification elements with different specifications. Or the direction identification element is connected in series in the circuit between the adjacent direction identification contacts. The sub control unit comprises a detection unit configured to obtain parameter of the direction identification contact or the direction transfer contact connected with the direction detection interface.

Preferably, the first data interface includes a first data probe, the power receiving interface includes a high-level probe and a ground probe, and the direction detection interface includes a direction detection probe. The first data probe, the high-level probe, the ground probe and the direction detection probe are arranged in a row extending from the centre to the edge of the first module interface.

A building block type spelling host comprises a main control unit and a host interface, the host interface includes a direction identification interface, a main data interface and a main power supply interface configured to supply power to the building block type character module. And one end of the direction identification interface, one end of the main data interface and one end of the main power supply interface are all connected with the main control unit. The direction identification interface includes at least two electrically conductive direction identification contacts. Each of the direction identification contacts is electrically connected with a direction identification element. The main data interface is configured to obtain spelling information from the building block type character module, and transmit the spelling information to the main control unit.

Preferably, the direction identification contacts are respectively connected to the direction identification elements with different specifications. Or the direction identification element is connected in series in the circuit between the adjacent direction identification contacts.

Preferably, the main data interface includes a main data contact, and the main power supply interface includes a high-level contact for providing a high level voltage to the building block type character module and a ground contact for providing a low level to the building block type character module. And the main data contact is connected to the main control unit.

Preferably, the main data contact, the high-level contact, the ground contact and the direction identification contact are all located in the same plane. The main data contact, the high-level contact and the ground contact are all ring-shaped. The rings of the at least two electrically conductive direction identification contacts are concentric with the main data contact, the high-level contact and the ground contact.

Preferably, the building block type spelling host further comprises a housing, and the main control unit is located in the housing. A host connector for connecting with a first connector of the building block type character module is arranged at one end of the housing. And the host connector is provided with a positioning portion for preventing displacement/misalignment of the character modules during a building process.

Preferably, the main control unit includes a memory for storing pre-set sentences or a slot for connecting a memory card for storing pre-set sentences.

A building block type spelling system includes the above building block type character module and the above building block type spelling host.

Compared with the prior art, the present invention has the following beneficial effects: multiple remarks being set on the character module, a direction identification element and a direction identification interface being set on the building block type spelling host and the character module, a direction detection interface for detecting the direction of the current building block type character module relative to the previous building block type character module being set on the current building block type character module. Therefore, it can calculate the character mark of each of the building block type character modules corresponding to the side of the building block type spelling host toward the user, and read the combined sentence. The number of the building block type character modules is small and easy to be found.

### BRIEF DESCRIPTION OF THE DRAWINGS

Fig. 1 is an exploded view of a building block type spelling system according to an embodiment of the present disclosure;
Fig. 2 is an assembled view of the building block type spelling system of Fig. 1;
Fig. 3 is a schematic circuit view of the building block type spelling system of Fig. 2;
Fig. 4 is a schematic structural view of the building block type spelling host of Fig. 1;
Fig. 5 is a schematic view of the direction identification of the building block type character module of Fig. 2;
Fig. 6 is another schematic view of the direction identification of the building block type character module of Fig. 2;
Fig. 7 is a schematic structural view of the building block type character module of Fig. 1 at an angle;
Fig. 8 is a schematic structural view of the building block type character module of Fig. 1, viewed at another angle;
Fig. 9 is a schematic structural view of the first module interface and the second module interface of the building block type character module of Fig. 1.
Fig. 10 is a schematic structural view of the positioning portion of the building block type spelling host of Fig. 1.

The figure: 100, building block type spelling host; 110, housing; 111, host connector; 101, positioing portion; 120, host interface; 121, direction identification interface; 1211, direction identification contact; 122, main data interface; 1221, main data contact; 123, main power supply interface; 1231, high-level contact; 1232, ground contact; 10, direction identification element;

200, building block type character module; 20, module body; 201, first module interface; 210, direction detection interface; 211, direction detection probe; 220; first data interface; 221 first data probe; 230, power receiving interface; 231, high level probe; 232, ground probe; 202, second module interface; 240, direction transfer interface; 241, direction transfer contact; 250, second data interface; 251, sub data contact; 260, sub power supply interface; 203, marking side; 2031.

### DETAILED DESCRIPTION OF THE PREFERRED EMBODIMENTS

Below, embodiments of the present invention will be described in greater detail with reference to the drawings. It should be noted that the figures are illustrative rather than limiting. The figures are not drawn to scale, do not illustrate every aspect of the described embodiments, and do not limit the scope of the present disclosure.

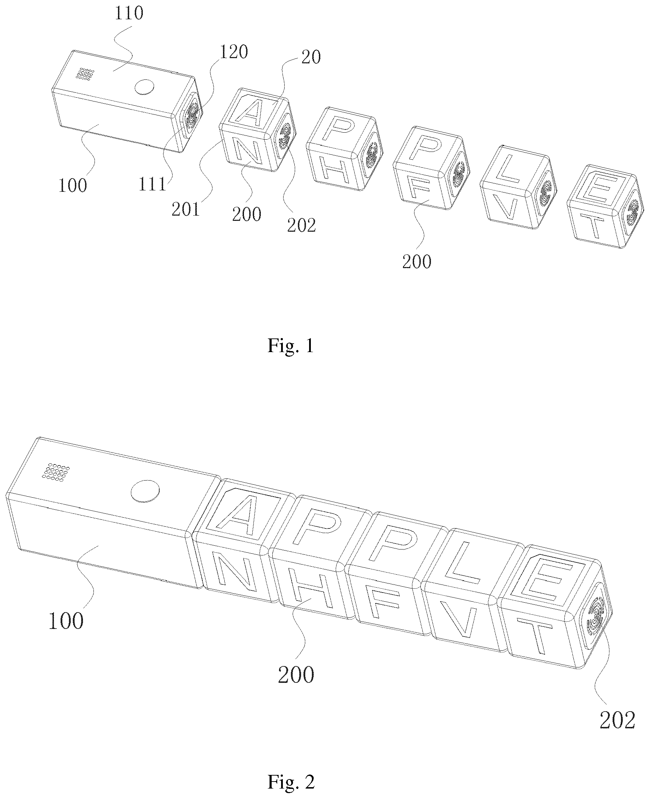

As shown in FIG. 1 to FIG. 3, an embodiment of the present invention provides a building block type spelling system which includes a building block type spelling host 100 and at least one building block type character module 200.

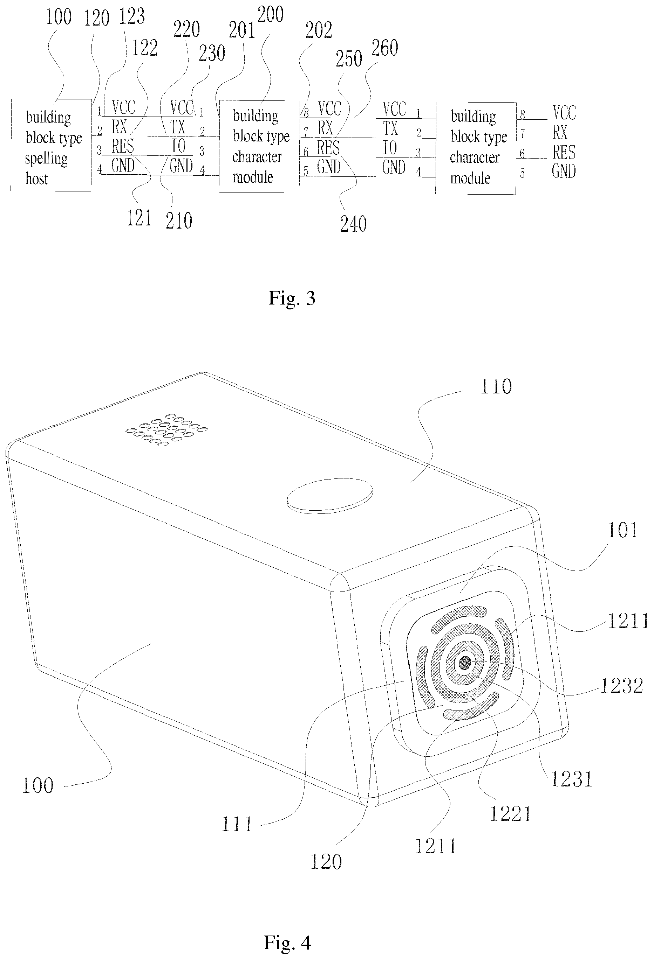

The building block type spelling host 100 comprises a main control unit (not shown) and a host interface 120. As shown in FIG. 3, the host interface 120 includes a direction identification interface 121, a main data interface 122, and a main power supply interface 123. As a preferred embodiment, the direction identification interface 121 includes pins RES of the building block type spelling host 100, the main data interface 122 includes pins RX of the building block type spelling host 100, and the main power supply interface 123 includes pins VCC and pins GND of the building block type spelling host 100. One end of the direction identification interface 121, one end of the main data interface 122 and one end of the main power supply interface 123 are all connected to the main control unit. The opposite end of the direction identification interface 121, the opposite end of the main data interface 122 and the opposite end of the main power supply interface 123 are all electrically connected with the first module interface 201 of the building block type character module 200. As shown in FIG. 4 to FIG. 6, the direction identification interface 121 includes at least two electrically conductive direction identification contacts 1211. Each of the direction identification contacts 1211 is electrically connected with a direction identification element 10.

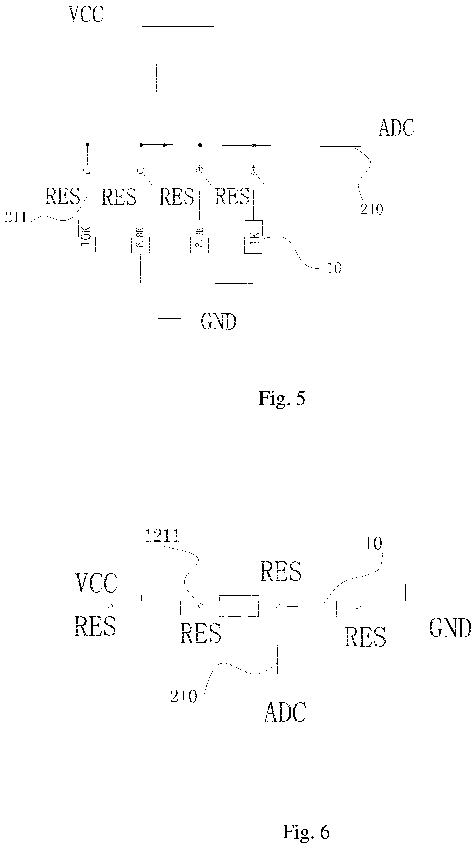

As a preferred embodiment, as shown in FIG. 5, the direction identification contacts 1211 are respectively connected to the direction identification elements 10 with different specifications, such as resistors of different resistance. When a high level voltage is applied to opposite ends of the resistors of direction identification element 10 through a voltage divider resistor, the direction identification contacts 1211 correspond to different voltage value. Alternatively, as shown in FIG. 6, the direction identification element 10 is connected in series in the circuit between the adjacent direction identification contacts 1211. When the direction identification element 10 is a resistor which could divide voltage, the direction identification contacts 1211 correspond to different voltage value.

In this embodiment, both the building block type spelling host 100 and the building block type character module 200 have four sides, therefore the direction identification interface 121 of the building block type spelling host 100 includes four direction identification contacts 1211 corresponding to the four sides respectively. Understandably, the four direction identification contacts 1211 can be placed in four side edges matching with the corresponding direction detection interfaces 210 of the building block type character module 200. The direction identification contact 1211 can be a dot-shaped contact, a planar contact, a conductive layer on a printed circuit board or a conductive contact welded on the printed circuit board. The main data interface 122 is configured to obtain spelling information from the building block type character module 200, and transmit the spelling information to the main control unit. The main power supply interface 123 is configured to supply power to the building block type character module 200.

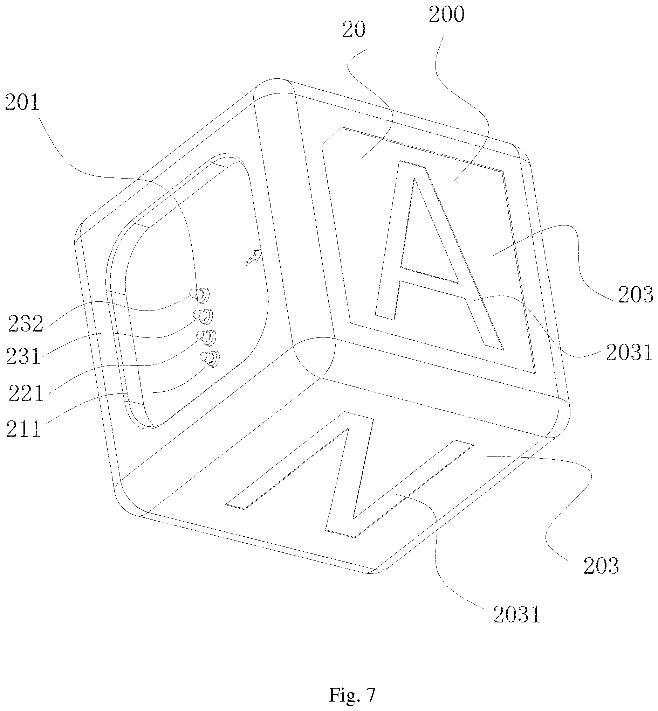

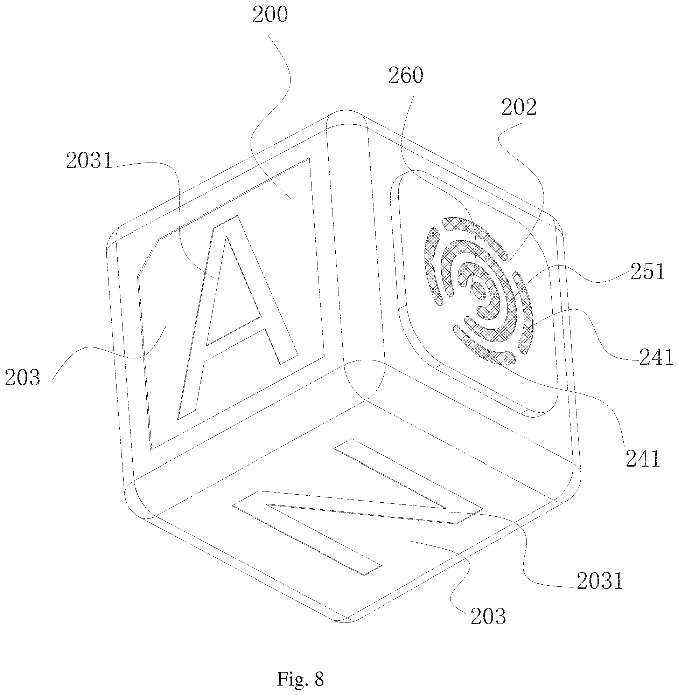

As shown in FIG. 7 to FIG. 9, the building block type character module 200 comprises a module body 20. The module body 20 includes a sub control unit (not labeled). The module body 20 comprises a first module interface 201 and a second module interface 202 respectively disposed on opposite ends thereof, and the first module interface 201 and the second module interface 202 are both electrically connected to the sub control unit. The module body 20 includes at least two marking sides 203 provided with character marks 2031. In this embodiment, the building block type character module 200 is a tetragonal prism comprising four marking sides 203. The four marking sides 203 are respectively provided with character mark 2031, such as "A", "N", "D", "W". As shown in FIG. 3, the first module interface 201 of the building block type character module 200 includes a direction detection interface 210, a first data interface 220 and a power receiving interface 230. In FIG. 3, the direction detection interface 210 includes a pin IO, the first data interface 220 includes a pin TX, and the power receiving interface 230 includes a pin VCC and a pin GND. The second module interface 202 includes a direction transfer interface 240, a second data interface 250 and a sub power supply interface 260. In FIG. 3, the direction transfer interface 240 includes a pin RES of the building block type character module 200, the second data interface 250 includes a pin RX of the building block type character module 200, and the sub power supply interface 260 includes a pin VCC and a pin GND. The first data interface 220 is configured to interface with the main data interface 122 of the building block type spelling host 100 or the second data interface 250 of the previous building block type character module 200. The power receiving interface 230 is configured to receive power from a main power supply interface 123 of the building block type spelling host 100 or the sub power supply interface 260 of the last building block type character module 200.

The second module interface 202 of the building block type character module 200 is preferably conformed with the host interface 120 of the building block type spelling host 100. As shown in FIG. 5, FIG. 6, FIG. 8 and FIG. 9, the direction transfer interface 240 includes at least two electrically conductive direction transfer contacts 241. Each of the direction transfer contacts 241 is electrically connected with a direction identification element 10.

As a preferred embodiment, as shown in FIG. 5, the direction transfer contacts 241 are respectively connected to the direction identification elements 10 with different specifications, such as resistors of different resistance. When a high level voltage is applied to the resistors through a voltage divider resistor, the direction transfer contacts 241 correspond to different voltage value. Alternatively, as shown in FIG. 6, the direction identification element 10 is connected in series in the circuit between the adjacent direction transfer contacts 241. When the direction identification element 10 is a resistor which could divide voltage, the direction transfer contacts 241 correspond to different voltage value.

In this embodiment, the direction transfer interface 240 includes four electrically conductive direction transfer contacts 241 arranged on the four sides or four side edges of the building block type character module 200 respectively. Understandably, the four direction transfer contacts 241 can be placed in anywhere matching with the corresponding side of the building block type character module 200.

The direction detection interface 210 is configured to electrically connect with a direction identification contact 1211 of the building block type spelling host 100. As shown in FIG. 1 and FIG. 2, one side of the building block type spelling host 100 is defined as a front surface, and the side of the direction detection interface 210 of the first building block type character module 200 corresponding to the front surface is equipped with a character mark "A". At this state, the direction detection interface 210 of the first building block type character module 200 is in contact with one of the direction identification contacts 1211 of the building block type spelling host 100. The sub control unit includes a detection unit (not shown) configured to obtain parameters of the direction identification contact 1211 or the direction transfer contact 241 connected with the direction detection interface 210. The detection unit detects the parameters of the direction identification contact 1211 connected with the direction detection interface 210, such as voltage value. Then, the sub control unit obtains the voltage value so as to identify which direction identification contact 1211 the direction detection interface 210 of the first building block type character module 200 is connected to, and thus identify which marking side 203 of the first building block type character module 200 the front surface of the building block type spelling host 100 corresponds to. For example, the character mark 2031 "A" of the first building block type character module 200 is currently in use.

Embodiments of the present invention provides a building block type spelling host 100, a building block type character module 200 and a building block type spelling system. A direction identification element 10 and a direction identification interface 1211 are set to the building block type spelling host 100. And a direction detection interface 210 for detecting the direction of the current building block type character module 200 corresponding to the previous building block type character module 200 is set on the current building block type character module 200. Therefore, it can calculate the character mark 2031 of each of the building block type character modules 200 corresponding to the side of the building block type spelling host 100 toward the user, and read the combined sentence. The required number of the building block type character modules 200 is small and easy to be found.

Furthermore, the direction detection interface 210 is electrically connected to the direction transfer contact 241 of the previous building block type character modules 200. As shown in FIG. 1 and FIG. 2, the marking side of the second building block type character module 200 which is provided with character mark 2031 "P" corresponds to the front surface of the building block type spelling host 100. At this state, the direction detection interface 210 of the second building block type character module 200 is in contact with one of the direction transfer contacts 241 of the first building block type character module 200. Then the direction detection interface 210 can detect the parameters of the direction transfer contact 241. For example, the direction detection interface 210 detects voltage value of the direction transfer contact 241 by an analog-to-digital converter. The sub control unit obtains the voltage value so as to identify which direction transfer contact 241 of the first building block type character module 200 the direction detection interface 210 of the second building block type character module 200 is connected to. That is, the sub control unit can identify the direction of the second building block type character module 200 relative to the first building block type character module 200.

The first data interface 220 of the building block type character module 200 is capable of communicating with the main data interface 122 of the building block type spelling host 100 or the second data interface 250 of the previous building block type character module 200. Therefore, the information of the direction transfer contact 241 connected with the direction detection interface 210 may be transmitted to the building block type spelling host 100 or the adjacent building block type character module 200. On the one hand, each of the building block type character module 200 can transmit the spelling information to the previous building block type character module 200 and to the building block type spelling host 100 finally. Wherein, the spelling information includes the direction of the current building block type character module 200 relative to the previous building block type character module 200, and the module number of the current building block type character module 200. The building block type spelling host 100 can identify the character mark 2031 of the corresponding marking side 203 of the building block type character module 200 based on the module number. Then, the building block type spelling host 100 can derive the direction of the second building block type character module 200 according to the direction of the first building block type character module 200, and so on. Therefore, the building block type spelling host 100 can obtain the character mark 2031 of each of the building block type character modules 200 corresponding to the front surface. On the other hand, the first building block type character module 200 can send its own direction to the second building block type character module 200. And according to the direction of the he character mark 2031 of the corresponding marking side 203 of the first building block type character module 200 and the relative direction of the second building block type character module 200 and the first building block type character module 200, the second building block type character module 200 can identify the character mark 2031 of the building block type character module 200 corresponding to the front surface, and so on. Then each of the building block type character module 200 transmits the corresponding character mark 2031 to the previous building block type character module 200 and to the building block type spelling host 100 finally.

As a preferred embodiment, the present building block type character module 200 is not connected next building block type character module 200 if the second data interface 250 such as contact RX continues to be low at intervals such as a one-second interval after the power receiving interface 230 of the present building block type character module 200. Then, the present building block type character module 200 transmits the corresponding character information and direction information to the building block type spelling host 100. And the building block type spelling host 100 can derive the character mark 2031 of each of the building block type character modules 200 corresponding to the front surface, and obtain the spelling sentences.

As a preferred embodiment, as shown in FIG. 4, the main interface 122 includes a main data contact 1221. The main power supply interface 123 includes a high-level contact 1231 and a ground contact 1232. Wherein the main data contact 1221 is connected to the main control unit. The high-level contact 1231 is used to provide a high level to the building block type character module 200, such as VCC. The ground contact 1232 is used to provide a low level to the building block type character module 200, such as GND. The contacts can be a dot-shaped contact, a planar contact, a conductive layer on the printed circuit board or a conductive contact welded on the printed circuit board.

As a preferred embodiment, as shown in FIG. 4, the main data contact 1221, the high-level contact 1231, the ground contact 1232 and the direction identification contact 1211 are all located in the same plane. The main data contact 1221, the high-level contact 1231 and the ground contact 1232 are all ring-shaped. The rings of at least two electrically conductive direction identification contacts 1211 are concentric with the main data contact 1221, the high-level contact 1231 and the ground contact 1232. In general, the sequence of the main data contact 1221, the high-level contact 1231 and the ground contact 1232 and the direction identification contact 1211 is not particularly required as long as the sequence is matched with the first module interface 201 of the building block type character module 200. The preferred direction identification contact 1211 is located at the outermost layer. The length and width of the direction identification contact 1211 can be made relatively large while keeping the safety distance among the identification contacts 1211 to be insulated.

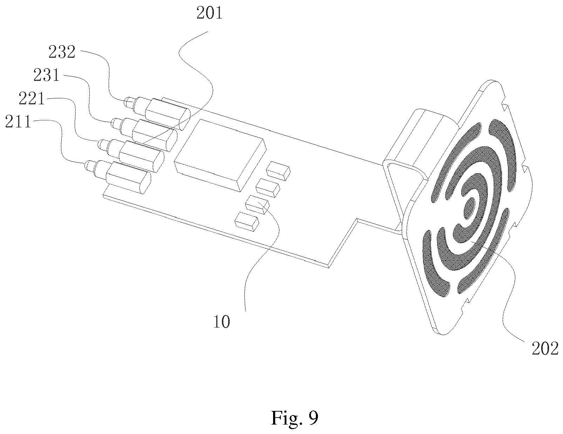

Preferably, the shape and the structure of the second module interface 202 of the building block type character module 200 are conformed with those of the host interface 120 of the building block type spelling host 100. In addition, FIG. 9 further provides another embodiment of the second module interface 202 of the building block type character module 200. The second data interface 250 of the building block type character module 200 includes a sub data contact 251 connected to the sub control unit. The sub power supply interface 260 also includes a high-level contact 1231 and a low-level contact. The sub data contact 251, the high-level contact 1231, the ground contact 1232 and the direction identification contact 241 are all located in the same plane. The sub data contact 251, the high-level contact 1231, the ground contact 1232 and the direction identification contact 241 are in the shape of ring with an opening. The rings of at least two electrically conducitve direction identification contacts 241 are concentric with the sub data contact 251, the high-level contact 1231 and the ground contact 1232. In this case, a single-layer circuit board may be used, and each of the contacts is connected to the sub control unit through the circuit located at the opening of the ring. As shown in FIG. 9, the circuit can be a flexible printed circuit.

As a preferred embodiment, as shown in FIG. 7 and FIG. 9, the first data interface 220 of the building block type character module 200 includes a first data probe 221, the power receiving interface 230 includes a high-level probe 231 and a ground probe 232, and the direction detection interface 211 includes a direction detection probe 211. The first data probe 221, the high-level probe 231, the ground probe 232 and the direction detection probe 211 are arranged in a row extending from the centre to the edge of the first module interface 201. The first data probe 221, the high-level probe 231, the ground probe 232 and the direction detection probe 211 can use spring needles so that the first data probe 221, the high-level probe 231, the ground probe 232 and the direction detection probe 211 are respectively in reliable electrical contact with the corresponding contact.

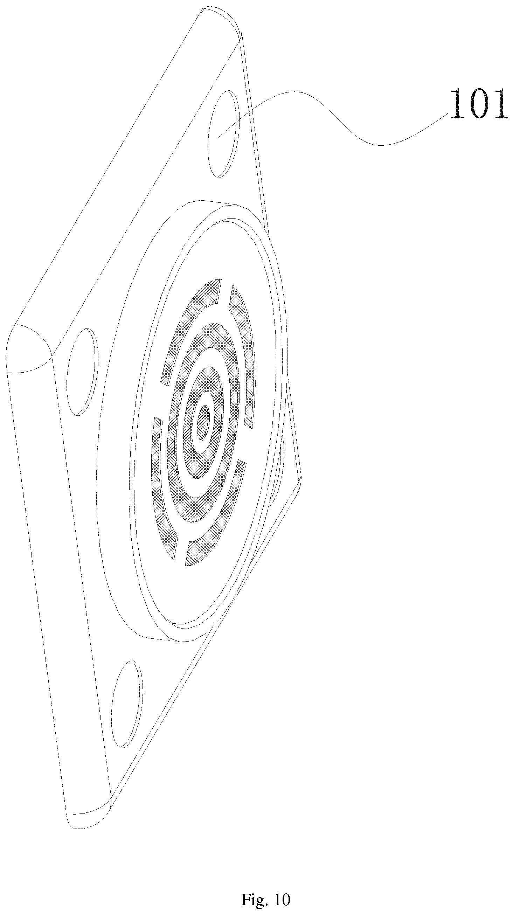

As a preferred embodiment, the building block type spelling host 100 further comprises a housing 110, and the main control unit is located in the housing 110. A host connector 111 for connecting with a first connector of the building block type character module 200 is arranged at one end of the housing 110. The direction identification interface 121, the main data interface 122 and the main power supply interface 123 are all located on the host connector 111. And the host connector 111 is provided with a positioning portion 101 for preventing displacement/misalignment of the character modules during a building process. As shown in FIG. 4, the positioning portion 101 can be a convex edge of the polygonal host connector 111, and the first connector of the building block type character module 200 can be a correspondingly shaped groove. As shown in FIG. 10, a protrusion or a slot is located on the outside of the host connector 111 or the second connector of the building block type character module 200; and a slot or a protrusion is correspondingly located on the outside of the host connector 111 or the second connector of the building block type character module 200. In another embodiment, the host connector 111, the first module interface 201, the second module interface 202 are respectively provided with a magnetic member (not shown) so that the building block type spelling host 100 is attractive to the building block type character module 200 and the angle formed between the building block type spelling host 100 and the building block type character module 200 can be adjusted automatically.

As a preferred embodiment, the main control unit includes a memory (not shown) for storing pre-set sentences or a slot (not shown) for connecting a memory card for storing pre-set sentences. The pre-set sentence can be foreign words, formulas, Chinese sentence, and so on. For example, the pre-set sentence can be "BANANA", "1+1=2", and so on.

As a preferred embodiment, the building block type spelling host 100 further includes a sounding module (not shown) which is connected to the main control unit. The sounding module is used to read the character mark 2031 of the building block type character module 200. As shown in FIG. 2, the control unit of the building block type spelling host 100 can detect the building block type character module 200 such as the building block type character module A in real time. Then the sound of "A" is issued through the sounding module. The sound of "Apple" is issued through the sounding module if a word "APPLE" is placed in order, and the sound of English "Apple" is issued through the sounding module. Preferably, the sound of Chinese "Apple" is further issued through the sounding module.

The above embodiments are only the preferred embodiments of the present invention, and do not limit the scope of the present invention. A person skilled in the art may make various other corresponding changes and deformations based on the described technical solutions and concepts. And all such changes and deformations shall also fall within the scope of the present invention.

## Claims

1. A building block type character module, **characterized in that** the building block type character module comprises a module body including a sub control unit, and the module body includes at least two marking sides provided with character marks; and a first module interface and a second module interface are respectively disposed on opposite ends of the module body, and the first module interface and the second module interface are both electrically connected to the sub control unit; and the first module interface includes a direction detection interface, a first data interface and a power receiving interface, and the second module interface includes a direction transfer interface, a second data interface and a sub power supply interface; and the direction transfer interface includes at least two electrically conductive direction transfer contacts, and each of the direction transfer contacts is electrically connected with a direction identification element; and the direction detection interface is configured to electrically connect with a direction identification contact of the building block type spelling host or a direction transfer contact of a previous building block type character module and detect parameter of the direction identification contact or the direction transfer contact connected with the direction detection interface; the first data interface is configured to interface with the main data interface of the building block type spelling host or the second data interface of the previous building block type character module, and the power receiving interface is configured to receive power from a main power supply interface of the building block type spelling host or the sub power supply interface of the previous building block type character module.

2. The building block type character module of claim 1, **characterized in that** the direction transfer contacts are respectively connected to direction identification elements with different specifications; or the direction identification element is connected in series in the circuit between the adjacent direction identification contacts; the sub control unit comprises a detection unit configured to obtain parameter of the direction identification contact or the direction transfer contact connected with the direction detection interface.

3. The building block type character module of claim 1 or claim 2, **characterized in that** the first data interface includes a first data probe, the power receiving interface includes a high-level probe and an ground probe, and the direction detection interface includes a direction detection probe; the first data probe, the high-level probe, the ground probe and the direction detection probe are arranged in a row extending from the centre to the edge of the first module interface.

4. A building block type spelling host, **characterized in that** the building block type spelling host comprises a main control unit and a host interface, the host interface includes a direction identification interface, a main data interface and a main power supply interface configured to supply power to the building block type character module; and one end of the direction identification interface, one end of the main data interface and one end of the main power supply interface are all connected with the main control unit; the direction identification interface includes at least two electrically conductive direction identification contacts , and each of the direction identification contacts is electrically connected with a direction identification element; the main data interface is configured to obtain spelling information from the building block type character module, and transmit the spelling information to the main control unit.

5. The building block type spelling host of claim 4, **characterized in that** the direction identification contacts are respectively connected to the direction identification elements with different specifications; or the direction identification element is connected in series in the circuit between the adjacent direction identification contacts.

6. The building block type spelling host of claim 4, **characterized in that** the main data interface includes a main data contact, and the main power supply interface includes a high-level contact for providing a high level voltage to the building block type character module and an ground contact for providing a low level to the building block type character module; and the main data contact is connected to the main control unit.

7. The building block type spelling host of claim 6, **characterized in that** the main data contact, the high-level contact, the ground contact and the direction identification contact are all located in the same plane; the main data contact, the high-level contact and the ground contact are all ring-shaped, and the rings of the at least two electrically conductive direction identification contacts are concentric with the main data contact, the high-level contact and the ground contact.

8. The building block type spelling host of any one of claims 4-7, **characterized in that** the building block type spelling host further comprises a housing, the main control unit is located in the housing, and a host connector for connecting with a first connector of the building block type character module is arranged at one end of the housing; and the host connector is provided with a positioning portion for preventing displacement/misalignment of the character modules during a building process.

9. The building block type spelling host of claim 8, **characterized in that** the main control unit includes a memory for storing pre-set sentences or a slot for connecting a memory card for storing pre-set sentences.

10. A building block type spelling system, **characterized in that** the building block type spelling system includes the building block type character module of any one of claims 1-3 and the building block type spelling host of any one of claims 4-9.
